# EUROPÄISCHE PATENTSCHRIFT

(11) **EP 0 635 670 B1**
(45) Veröffentlichungstag und Bekanntmachung des Hinweises auf die Patenterteilung: **04.02.1998**
(21) Anmeldenummer: 94110729.4
(22) Anmeldetag: 11.07.1994
(51) Int. Cl.: F16L 47/02

(54) **Rohrverbinder, Leitungssystem mit derartigen Rohrverbindern und Verfahren zur Herstellung von Verbindungen zwischen derartigen Rohrverbindern und Rohrleitungen**
Pipe connection, conduit system comprising such a pipe connection and a method of connecting such a pipe connection and pipes
Raccord de tuyaux, système de conduite comportant ce raccord et procédé de raccordement entre ce raccord et des tuyaux

(30) Priorität: 16.07.1993 DE 9310685 U
(43) Veröffentlichungstag der Anmeldung: 25.01.1995
(73) Patentinhaber: EMS-INVENTA AG, 8002 Zürich (CH)
(72) Erfinder: Wasser, Beat, CH-7017 Flims-Dorf (CH)
(74) Vertreter: Müller-Boré & Partner Patentanwälte

(56) Entgegenhaltungen:
- CH-A- 554 232
- DE-A- 3 903 551
- DE-C- 3 843 995
- FR-A- 2 124 309

## Beschreibung

Die Erfindung betrifft einen fittinglosen Rohrverschluss bzw.- verbinder (Connector) zum Rotationsschweissen von Rohranschlüssen, ein Leitungssystem mit diesem Rohrverschluss bzw. -verbinder sowie ein Verfahren zur Herstellung dieses Leitungssystems.

Die Erfindung betrifft insbesondere einen zweiteiligen, d.h. aus Kern-(Vater-)Teil und Hülsen-(Mutter-)Teil bestehenden Rohrverschluss bzw. -verbinder aus Polymeren für Flüssigkeitsleitungen, welche durch Kunststoffe permeierende Medien führen, der für das Rotationsverschweissen mit Polymerrohren, insbesondere für permeationsdichte Verschweissungen, geeignet ist.

Die Erfindung betrifft weiterhin recyclefähige rotationsgeschweisste Leitungssysteme aus dem vorgenannten Rohrverschluss und Rohren aus gleichen Polymeren.

Die Permeation von flüchtigen Medien aus lösungsmittelführenden Leitungssystemen wird aus Gründen der Luftreinhaltung weltweit zunehmende Beachtung gewidmet. So werden vor allem in Europa und in den U.S.A. durch neue Luftreinhalteverordnungen die Emissions-Grenzwerte, zum Beispiel bei Motorfahrzeugen, stark reduziert.

Bei der Auswahl von Kraftstoff oder Lösungsmittel führenden Leitungssystemen, die im wesentlichen aus Polymeren bestehen, sind nicht nur deren Materialeigenschaften, sondern auch die Leitungsverbindungen von wesentlichem Einfluss auf die unerwünschten Emissionen. Solche Leitungsverbindungen sind heute bevorzugt Schnell- und/oder Schnappverschlüsse zur problemlosen Montage, die über geeignete angeformte oder eingeschlagene Profile und bevorzugt mit Hilfe metallischer Befestigungselemente an die Rohrleitungen angeschlossen sind.

Die Nachteile solcher Anschlüsse, die den Stand der Technik bilden, liegen in Undichtigkeiten, die während der Gebrauchsdauer bevorzugt durch
- Vibration der Bauteile,
- Versteifung der Polymeren durch fortschreitende Extraktion der Additive, speziell der Weichmacher,
- Verletzung der Barriereschicht der Rohre bei der Montage,
- Montagefehler anderer Art
auftreten.

Die CH-A-554 232 offenbart ein Verfahren zum Bilden eines Verbindungsabschnittes an einem Rohrende eines Rohres aus Kunststoff und einen nach dem Verfahren hergestellten Verbindungsabschnitt, bei welchen am Ende eines Kunststoffrohres ein Verbindungsabschnitt geformt und durch Rotationsreibschweissen ein Profilring aufgesetzt wird, wodurch ein Dichtungsring in einer Ringnut eingesetzt werden kann. In das derart modifizierte Rohrende kann das unbearbeitete Ende eines zweiten Rohres gesteckt werden.

Diese Verbindung ist jedoch nicht permeationsdicht und es wird weiterhin ein Dichtungsring als zusätzliche Abdichtung benötigt. Darüberhinaus ist die Verbindung nicht zuverlässig gegen Lösen gesichert, insbesondere weil das zweite Rohr lediglich eingeschoben wird.

Es bestand somit die Aufgabe, die vorgenannten Nachteile des Standes der Technik zu überwinden und ein permeationsdichtes System aus Rohrverbinder und Rohrleitung zur Verfügung zu stellen.

Diese Aufgabe wird durch die kennzeichenden Merkmale der Ansprüche gelöst.

Diese Aufgabe wird durch den Rohrverbinder mit den kennzeichenden Merkmalen des Anspruchs 1 und das recyclefähige rotationsgeschweisste Leitungssystem mit den kennzeichnenden Merkmalen des Anspruchs 5 gelöst. Sie wird insbesondere durch den für das Rotationsschweissen verwendbaren Rohrverbinder gelöst, bei dem sowohl das sogenannte 'Vaterteil' als auch das sogenannte 'Mutterteil' durch einen speziell geformten Anschlussbereich zum Rotationsschweissen geeignet ist.

Beim Rotationsschweissen solcher Bauteile wird bevorzugt der Verbinderteil mit hoher Rotationsgeschwindigkeit auf das fest eingespannte Rohr aufgebracht. Im Verlauf des Zusammenfügens der in ihren Dimensionen aufeinander abgestimmten Bauteile wird infolge der Friktionswärme das Polymermaterial zum Schmelzen gebracht und anschliessend durch Erstarren zum vollkommenen Abdichten der Anschlussteile veranlasst.

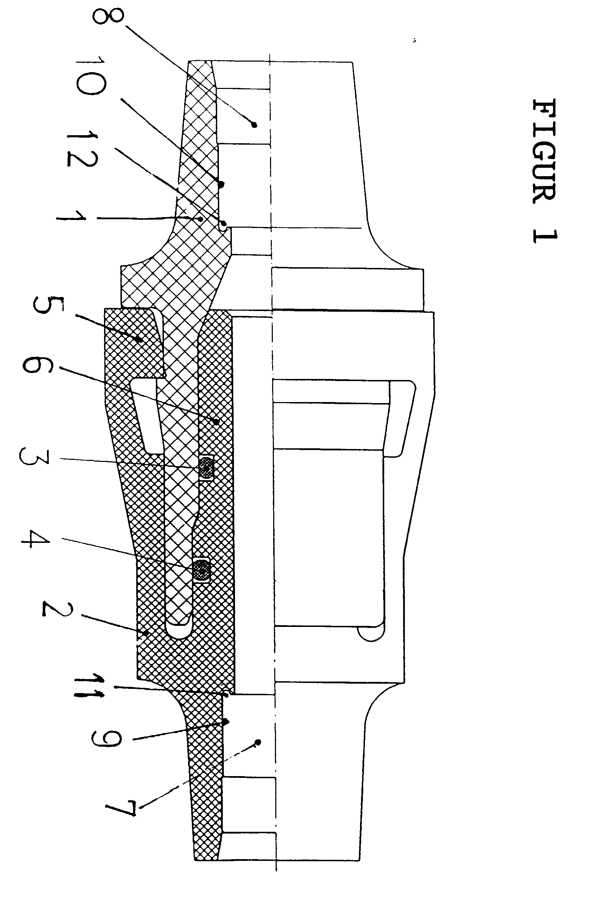

Figur 1 zeigt ein Beispiel eines erfindungsgemässen Schnellverschlusses für das Rotationsschweissen.

Der für den erfindungsgemässen Rohrverbinder beispielhaft abgebildete Schnellverschluss mit Schnapphaken 5 und zwei Dichtelementen 3, 4 am Stutzen 6 des Vaterstückes 1 - analog DE-PS 38 43 995 - hat im zylinderförmigen Anschlussbereich 8 des Vaterstücks 1 und im zylinderförmigen Anschlussbereich 7 des Mutterstücks 2 je eine Querschnittsverengung 9, 10 zur Materialzugabe für das Friktionsschmelzen der Polymeren sowie je eine Ringnut 11, 12 zur Aufnahme von geschmolzenem Polymermaterial oder von Material aus entstandenen Brauen bzw. Graten.

Die Polymere des erfindungsgemässen Rohrverschlusses enthalten in vorteilhafter Weise leitfähige Additive, bevorzugt Leitruss, die sinnvollerweise den Additiven der anzuschweissenden Rohre entsprechen. Die Polymeren der Rohrverschlüsse können ausserdem vorteilhafterweise verstärkende Füllstoffe wie Glas-, Kohlenstoff-, Polymer- oder mineralische Verstärkungsfasern und Whisker enthalten.

Die Polymeren des erfindungsgemässen Rohrverschlusses sind vorteilhafterweise Polyamide, wie Homo-, Copolyamide oder ihre Blends mit thermoplastischen Polymeren. Bevorzugte Polyamide sind PA6, PA66, PA11 und PA12.

Leitungssysteme aus dem erfindungsgemässen Rohrverschluss und Rohrleitungen bestehen vorteilhafterweise aus dem gleichen Polymermaterial, um eine optimale Haftung und Permeationsdichtigkeit der rotationsverschweissten Teile zu erzielen. Dabei können die Polymeren der Bauteile gleiche Additive, wie zum Beispiel Leitrusse enthalten. Es kann von Vorteil sein, wenn z.B. die Füllstoffe, speziell die Verstärkungsfasern, nur im Polymeren des Rohrverschlusses enthalten sind, wenn beispielsweise die Rohre nicht zusätzlich versteift werden sollen.

Erfindungsgemässe Leitungssysteme mit Rohrverschluss und Leitungen aus dem gleichen Polymer, insbesondere aus Polyamiden, sind recyclefähig und erfüllen damit in besonders vorteilhafter Weise die heutigen Anforderungen im Hinblick auf umweltgerechte Entsorgungsmöglichkeiten. Die Erfindung beinhaltet weiterhin das Verfahren zum Herstellen solcher erfindungsgemässen Leitungssysteme durch Rotationsschweissen und die nach diesem Verfahren hergestellten Leitungssysteme.

## Patentansprüche

1. Aus Kern-Teil (1) und Hülsen-Teil (2) bestehender Rohrverbinder aus Polymeren für Flüssigkeitsleitungen, verwendbar für das Rotationsschweissen mit Polymerleitungen, insbesondere für permeationsdichtes Anschliessen von Rohrleitungen aus dem gleichen Polymeren, dadurch gekennzeichnet, dass jeder der beiden Rohrverbinderteile (1, 2) einen zylinderförmigen Anschlussbereich (7, 8) für das Rotationsschweissen aufweist, welcher zumindestens teilweise mit einer Querschnittsverengung (9, 10) und mit einer Ringnut (11, 12) zur Aufnahme von geschmolzenem Polymermaterial oder von Material aus entstandenen Graten versehen ist.

2. Rohrverbinder gemäss dem Anspruch 1, dadurch gekennzeichnet, dass das Polymere ausgewählt ist aus der Gruppe Homopolyamide, Copolyamide, Polyamidblends mit thermoplastischen Polymeren, wobei PA6, PA66, PA11, PA12 bevorzugt sind.

3. Rohrverbinder gemäss den Ansprüchen 1 oder 2, dadurch gekennzeichnet, dass das Polymere leitfähige Additive, bevorzugt Leitruss, enthält.

4. Rohrverbinder gemäss den Ansprüchen 1 bis 3, dadurch gekennzeichnet, dass das Polymere verstärkende Füllstoffe aus der Gruppe Glasfasern, Kohlenstofffasern, polymere Verstärkungsfasern, Whiskers und Mineralfasern enthält.

5. Recyclefähiges rotationsgeschweisstes Leitungssystem aus einem Rohrverbinder gemäss den Ansprüchen 1 bis 4 und Rohrleitungen aus dem gleichen Polymeren, insbesondere aus Polyamiden aus der Gruppe Homopolyamide, Copolyamide, Polyamidblends mit thermoplastischen Polymeren, wobei PA6, PA66, PA11, PA12 als Polyamide bevorzugt sind.

6. Rotationsgeschweisstes Leitungssystem gemäss Anspruch 5, dadurch gekennzeichnet, dass das Polymere des Rohrverbinders und der Rohrleitungen die gleichen Additive, bevorzugt Leitrusse, enthält.

7. Rotationsgeschweisstes Leitungssystem gemäss Anspruch 5 oder 6, dadurch gekennzeichnet, dass nur das Polymere des Rohrverbinders verstärkende Füllstoffe enthält.

8. Verfahren zur Herstellung von permeationsdichten Verbindungen zwischen Rohrverbinderteilen eines Rohrverbinders gemäss den Ansprüchen 1 bis 4 und Rohrleitungen insbesondere aus dem gleichen Polymeren durch Rotationsschweissen.

9. Recyclefähige permeationsdichte Leitungssysteme aus Polymeren, insbesondere aus Polyamiden, hergestellt nach dem Verfahren gemäss Anspruch 8.

## Claims

1. Polymer pipe connector comprising a core part (1) and a sleeve part (2) for liquid lines, which can be used for spin welding with polymer lines, in particular for connecting pipelines made of the same polymer such that they are sealed against permeation, characterized in that each of the two pipe connector parts (1, 2) has a cylindrical connection region (7, 8) for spin welding, which is provided at least partially with a cross-sectional constriction (9, 10) and with an annular groove (11, 12) for receiving molten polymer material or material from flash which has been produced.

2. Pipe connector according to Claim 1, characterized in that the polymer is selected from the group comprising homopolyamides, copolyamides and polyamide blends with thermoplastic polymers, nylon-6, nylon-66, nylon-11 and nylon-12 being preferred.

3. Pipe connector according to Claims 1 or 2, characterized in that the polymer contains conductive additives, preferably conductive carbon black.

4. Pipe connector according to Claims 1 to 3, characterized in that the polymer contains reinforcing fillers from the group comprising glass fibres, carbon fibres, polymeric reinforcing fibres, whiskers and mineral fibres.

5. Recyclable spin-welded line system comprising a pipe connector according to Claims 1 to 4 and pipelines made of the same polymer, in particular of polyamides from the group comprising homopolyamides, copolyamides and polyamide blends with thermoplastic polymers, nylon-6, nylon-66, nylon-11 and nylon-12 being preferred as polyamides.

6. Spin-welded line system according to Claim 5, characterized in that the polymer of the pipe connector and of the pipelines contains the same additives, preferably conductive carbon blacks.

7. Spin-welded line system according to Claim 5 or 6, characterized in that only the polymer of the pipe connector contains reinforcing fillers.

8. Method of producing connections sealed against permeation between pipe connector parts of a pipe connector according to Claims 1 to 4 and pipelines, in particular made of the same polymer, by spin welding.

9. Recyclable permeation-sealed line systems made of polymers, in particular of polyamides, produced by the method according to Claim 8.

## Revendications

1. Raccord de tuyaux en polymères, formé d'une partie centrale (1) et d'un manchon (2) pour des canalisations de liquides, qu'on peut utiliser pour le soudage par rotation avec des conduites en polymère, en particulier pour le raccordement étanche de tuyaux constitués d'un même polymère, caractérisé en ce que chacune des deux parties (1, 2) du raccord de tuyaux comporte une zone cylindrique de raccordement (7, 8) pour le soudage par rotation, qui est pourvue au moins en partie d'un rétrécissement de la section transversale (9, 10) et d'une rainure annulaire (11, 12) pour recevoir un matériau polymère fondu ou un matériau à base de bavures formées.

2. Raccord de tuyaux selon la revendication 1, caractérisé en ce que le polymère est choisi dans l'ensemble constitué par les homopolyamides, les copolyamides, des mélanges de polyamides avec des polymères thermoplastiques, le PA6, le PA66, le PA11 et le PA12 étant préférés.

3. Raccord de tuyaux selon la revendication 1 ou 2, caractérisé en ce que le polymère contient des additifs conducteurs, de préférence du noir de carbone conducteur.

4. Raccord de tuyaux selon les revendications 1 à 3, caractérisé en ce que le polymère contient des charges renforçantes choisies dans l'ensemble constitué par les fibres de verre, les fibres de carbone, les fibres polymères de renforcement, les barbes et les fibres minérales.

5. Système de conduite recyclable soudé par rotation, formé d'un raccord de tuyaux selon les revendications 1 à 4 et de tuyaux constitués du même polymère, en particulier de polyamides choisis dans l'ensemble constitué par les homopolyamides, les copolyamides, des mélanges de polyamides avec des polymères thermoplastiques, le PA6, le PA66, le PA11 et le PA12 étant préférés en tant que polyamides.

6. Système de conduite soudé par rotation selon la revendication 5, caractérisé en ce que le polymère du raccord de tuyaux et celui des tuyaux contiennent les mêmes additifs, de préférence du noir de carbone conducteur.

7. Système de conduite soudé par rotation selon la revendication 5 ou 6, caractérisé en ce que seulement le polymère du raccord de tuyaux contient des charges renforçantes.

8. Procédé de fabrication de raccordements étanches entre les parties d'un raccord de tuyaux selon les revendications 1 à 4 et de tuyaux, en particulier formés d'un même polymère, par soudage par rotation.

9. Systèmes de conduite étanches recyclables formés de polymères, en particulier fabriqués à partir de polyamides, conformément au procédé selon la revendication 8.
